(19) Europäisches Patentamt
European Patent Office
Office européen des brevets

(11) Veröffentlichungsnummer: **0 474 084 A2**

(12) **EUROPÄISCHE PATENTANMELDUNG**

(21) Anmeldenummer: **91114278.4**

(51) Int. Cl.5: **C08G 63/668**, B65D 81/34

(22) Anmeldetag: **26.08.91**

(30) Priorität: **03.09.90 DE 4027853**

(43) Veröffentlichungstag der Anmeldung: **11.03.92 Patentblatt 92/11**

(84) Benannte Vertragsstaaten: **BE DE FR GB LU NL**

(71) Anmelder: **HOECHST AKTIENGESELLSCHAFT**
**Postfach 80 03 20**
**W-6230 Frankfurt am Main 80(DE)**

(72) Erfinder: **Beissel, Dieter**
**Am Hohen Stein 14**
**W-6200 Wiesbaden(DE)**
Erfinder: **Saal, Marliese**
**Buchenweg 7**
**W-6501 Heidesheim(DE)**

(54) **Mikrowellenverträgliche Lebensmittelabdeckfolie.**

(57) Es wird eine Abdeckfolie für Lebensmittel beschrieben, die in einem Mikrowellenofen erwärmt werden. Die Abdeckfolie enthält einen Copolyetherester, der aufgebaut ist aus immer wiederkehrenden Einheiten mit der folgenden allgemeinen Formel:

$$- O - R_1 - O - \overset{\displaystyle O}{\overset{\|}{C}} - R_2 - \overset{\displaystyle O}{\overset{\|}{C}} -$$

$R_1$ bedeutet einen Alkylenrest mit 1 bis 6 C-Atomen oder einen Cycloalkandimethylenrest mit 7 oder 8 C-Atomen oder einen Polyoxyalkylenrest mit einem mittleren Molekulargewicht, angegeben als Gewichtsmittel, im Bereich von 900 bis 4 000. $R_2$ bedeutet einen Phenylenrest.

EP 0 474 084 A2

Die vorliegende Erfindung betrifft eine Abdeckfolie für Lebensmittel, die in einem Mikrowellenofen erwärmt werden.

Mikrowellenöfen werden häufig benutzt, um in Behältnissen befindliche Lebensmittel durch Erwärmung zuzubereiten. Zum Schutz vor dem Austrocknen der Lebensmittel werden solche Behältnisse zweckmäßigerweise abgedeckt, d. h. sie sollen einerseits nicht so fest verschlossen sein, daß gelegentlich während des Zubereitungsprozesses auftretender Überdruck nicht ausgeglichen werden kann, es soll aber andererseits ein vollkommen ungehinderter Austritt von Wasserdampf unterbunden werden. Hierzu soll die Folie eine ausreichende Haftung auf haushaltsüblichen Materialien wie Glas, Porzellan, Kunststoff und ähnlichem (Cling-Effekt) aufweisen.

Übliche Haushaltsfolien aus Polyethylen weisen zwar einen zufriedenstellenden Cling-Effekt auf, sie eignen sich aber als Abdeckfolie in Mikrowellenöfen nicht, da Polyethylen bei den Temperaturen während des Zubereitungsprozesses in dem Ofen schmilzt.

Die DE-C-36 40 011 beschreibt eine Folie aus modifiziertem Polypropylen, die zwar der thermischen Belastung weitgehend gewachsen ist, nachteiligerweise aber mit Löchern versehen ist. Das Vorhandensein der Löcher macht die Folie ungeeignet zum Abdecken der Lebensmittel während der Zeit der Lagerung z. B. in einem Kühlschrank, die dem Zubereitungsprozeß vorausgeht. Außerdem beginnt die Folie beim Erwärmen von stark fetthaltigen Speisen, wobei nicht selten Temperaturen von mehr als 140 °C auftreten können, aufzuschmelzen.

Aufgabe der Erfindung war es, eine mikrowellenverträgliche Abdeckfolie für Lebensmittel zu schaffen, die gleichzeitig die Bedingungen erfüllt, daß sie zufriedenstellende Clingeigenschaften besitzt und daß sie auch bei Temperaturen bis maximal 190 °C in einem Mikrowellenofen nicht schmilzt.

Gelöst wird diese Aufgabe durch eine Folie der eingangs genannten Gattung, deren kennzeichnendes Merkmal darin besteht, daß sie einen Copolyetherester enthält, der aufgebaut ist aus immer wiederkehrenden Einheiten mit der folgenden allgemeinen Formel:

$$- O - R_1 - O - \overset{\overset{\displaystyle O}{\|}}{C} - R_2 - \overset{\overset{\displaystyle O}{\|}}{C} -$$

in der $R_1$

i) einen Alkylenrest mit 1 bis 6 C-Atomen oder

ii) einen Cycloalkandimethylenrest mit 7 oder 8 C-Atomen oder

iii) einen Polyoxyalkylenrest mit einem mittleren Molekulargewicht, angegeben als Gewichtsmittel, im Bereich von 900 bis 4 000

und in der $R_2$ einen Phenylenrest bedeuten.

Die in der erfindungsgemäßen Folie enthaltenen Copolyetherester sind ersichtlicherweise aus einer Glykolkomponente und einer Säurekomponente aufgebaut. Dabei ist jeweils auf eine ganzes Äquivalent Glykolkomponente ein ganzes Äquivalent Säurekomponente zu rechnen. Als Säurekomponente wird erfindungsgemäß Terephthalsäure oder Isophthalsäure oder ein Gemisch aus diesen beiden im Verhältnis 1:1 bis 3:1 eingesetzt. Als Glykolkomponente eignen sich insbesondere Ethylenglykol, 1,3-Propylenglykol oder 1,4-Tetramethylenglykol in einer Menge im Bereich von 0 bis 40 Gew.-%, vorzugsweise von 10 bis 30 Gew.-%, oder 1,4-Cyclohexandimethanol in einer Menge von 0 bis 40 Gew.-% und Polytetramethylenetherglykol (Polytetrahydrofuran) in einer Menge von wenigstens 30 Gew.-%, vorzugsweise im Bereich von 40 bis 70 Gew.-%, wobei alle Angaben bezogen sind auf das Gesamtgewicht an Copolyetherester und wobei das Polytetramethylenetherglykol vorzugsweise ein mittleres Molekulargewicht im Bereich von 1 000 bis 2 000 besitzt, ausgedrückt als Gewichtsmittel.

Die erfindungsgemäße Folie wird aus dem beschriebenen Rohstoff nach dem Kühlwalzenverfahren hergestellt. Dabei wird der Copolyetherester bei Temperaturen von 180 °C bis 240 °C durch eine Düse als Schmelze extrudiert und unmittelbar danach wird die Schmelze mittels einer polierten und mit Wasser gekühlten Kühlwalze zu einer Folie abgeschreckt, die dann auf Rollen aufgewickelt werden kann.

Danach erhält man eine Folie mit einer Dicke im Bereich von 5 bis 100 µm, vorzugsweise von 15 bis 25 µm. Die Folie kann übliche Gleitmittel, Antiblockmittel, Stabilisatoren und Antistatika in den üblichen Mengen enthalten.

Überraschend zeigte sich, daß es mit der vorstehend beschriebenen erfindungsgemäßen Folie möglich ist, eine zweckmäßige Abdeckung bei dem Zubereitungsprozeß von Speisen in einem Mikrowellenofen bereitzustellen, weil gleichzeitig ein guter Cling-Effekt und eine hervorragende Temperaturbeständigkeit

erreicht wurden. Außerdem zeigte sich, daß eine Lochung der Folie als Druckausgleich während des Zubereitungsprozesses im Mikrowellenofen nicht erforderlich ist, weil die Folie eine ausreichend große Wasserdampfdurchlässigkeit besitzt.

Die Erfindung soll nachfolgend anhand von Ausführungsbeispielen näher beschrieben werden, ohne jedoch auf die konkret beschriebenen Ausführungsformen beschränkt zu sein.

Beispiel 1

Aus einem Copolyetherester, enthaltend

31,8 Gew.-% Terephthalsäure,
17,7 Gew.-% 1,4-Tetramethylenglykol und
50,5 Gew.-% Polytetrahydrofuran mit einem mittleren Molekulargewicht von 2 000,

der einen Schmelzpunkt von 204 °C (Erweichungsbereich von 200 bis 208 °C) hatte und unter der Bezeichnung (R)Riteflex RKX 033 bei der Firma HOECHST AG erhältlich ist, wurde nach dem Kühlwalzenverfahren bei einer Düsentemperatur von 200 °C durch Abschrecken der Schmelze auf eine Temperatur unterhalb von 30 °C eine 15 µm dicke Folie hergestellt.

Beispiel 2

Aus einem Copolyetherester, enthaltend

40,8 Gew.-% Terephthalsäure,
22,4 Gew.-% Tetramethylenglykol und
36,8 Gew.-% Polytetrahydrofuran mit einem mittleren Molekulargewicht von 1 000,

der einen Erweichungsbereich von 195 bis 201 °C besaß und unter der Bezeichnung (R)Riteflex RKX 024 bei der Firma HOECHST AG erhältlich ist, wurde nach dem Kühlwalzenverfahren bei einer Düsentemperatur von 200 °C durch Abschrecken der Schmelze auf eine Temperatur unterhalb von 30 °C eine 15 µm dicke Folie hergestellt.

Beispiel 3 (Vergleichsbeispiel)

Es wurde eine perforierte Mikrowellenfolie aus Polypropylen mit einem hohen ataktischen Anteil gemäß DE-C-36 40 011 bereitgestellt; die Folie hatte eine Dicke von 15 µm.

Beispiel 4 (Vergleichsbeispiel)

Es wurde eine Haushaltsfolie aus Hochdruckpolyethylen bereitgestellt; die Folie hatte eine Dicke von 15 µm.

Beispiel 5

Zum Vergleich der Folien wurde Sonnenblumenöl in Porzellanschalen gefüllt und jeweils mit einer Folie abgedeckt. Die abgedeckten Porzellanschalen wurden anschließend in einem Mikrowellenofen über eine Zeit von 5 min erhitzt. Die Haftungseigenschaften wurden durch vergleichende Beurteilung der Kraft, die benötigt wird, um die Folie von dem Behältnis abzuziehen, bewertet. Die Mikrowellentauglichkeit zeigte sich in dem Versuch durch die Temperaturbeständigkeit der Folie. Das Ergebnis des Vergleichs ist in der nachfolgenden Tabelle angegeben:

| | Haftungseigenschaften | Mikrowellentauglichkeit |
|---|---|---|
| Riteflex RKX 033 | ++ | Folie zeigt keinerlei Veränderung |
| Riteflex RKX 024 | ++ | Folie zeigt keinerlei Veränderung |
| Beispiel 3 | + | Folie beginnt an den Berührungsflächen auf der Porzellanschale aufzuschmelzen (zieht Fäden) |
| Beispiel 4 | 0 | Folie schmilzt vollständig an den Berührungsflächen auf die Porzellanschale auf |

++ sehr gute Haftung

\+ gute Haftung

0 befriedigende Haftung

## Patentansprüche

1. Abdeckfolie für Lebensmittel, die in einem Mikrowellenofen erwärmt werden, dadurch gekennzeichnet, daß sie einen Copolyetherester enthält, der aufgebaut ist aus immer wiederkehrenden Einheiten mit der folgenden allgemeinen Formel:

$$-O-R_1-O-\overset{\overset{O}{\|}}{C}-R_2-\overset{\overset{O}{\|}}{C}-$$

in der $R_1$
i) einen Alkylenrest mit 1 bis 6 C-Atomen oder
ii) einen Cycloalkandimethylenrest mit 7 oder 8 C-Atomen oder
iii) einen Polyoxyalkylenrest mit einem mittleren Molekulargewicht, angegeben als Gewichtsmittel, im Bereich von 900 bis 4 000
und in der $R_2$ einen Phenylenrest bedeuten.

2. Abdeckfolie nach Anspruch 1, dadurch gekennzeichnet, daß $R_1$ ein Ethylen-, ein 1,3-Propylen- oder ein 1,4-Tetramethylenrest ist in einer Menge von 0 bis 40 Gew.-%, vorzugsweise von 10 bis 30 Gew.-%, bezogen auf das Gesamtgewicht an Copolyetherester.

3. Abdeckfolie nach Anspruch 1, dadurch gekennzeichnet, daß $R_1$ ein Cyclohexandimethylenrest ist in einer Menge von 0 bis 40 Gew.-%, bezogen auf das Gesamtgewicht an Copolyetherester.

4. Abdeckfolie nach Anspruch 1, dadurch gekennzeichnet, daß $R_1$ ein Polytetramethylenetherrest ist mit einem mittleren Molekulargewicht im Bereich von 1000 bis 2000 in einer Menge von wenigstens 30 Gew.-%, vorzugsweise von 40 bis 70 Gew.-%, bezogen auf das Gesamtgewicht an Copolyetherester.

5. Abdeckfolie nach einem der Ansprüche 1 bis 4, dadurch gekennzeichnet, daß $R_2$ ein 1,4- oder ein 1,3-Phenylenrest ist oder eine Mischung von diesen im Verhältnis 1:1 bis 5:1.

6. Abdeckfolie nach einem der Ansprüche 1 bis 5, dadurch gekennzeichnet, daß sie temperaturbeständig ist bis zu einer Temperatur von 190 °C.

7. Abdeckfolie nach Anspruch 6, dadurch gekennzeichnet, daß sie temperaturbeständig ist bis zu einer Temperatur von 170 °C.

8. Abdeckfolie nach einem der Ansprüche 1 bis 7, dadurch gekennzeichnet, daß sie eine Dicke im Bereich von 5 bis 100 µm, vorzugsweise von 15 bis 25 µm, besitzt.

9. Verfahren zum Zubereiten von Nahrungsmitteln in einem Mikrowellenofen, bei dem man eine Abdeckfolie nach einem der Ansprüche 1 bis 8 über ein Gefäß legt, in dem sich die Nahrungsmittel befinden.